# EUROPÄISCHE PATENTSCHRIFT

(11) **EP 1 434 023 B1**
(45) Veröffentlichungstag und Bekanntmachung des Hinweises auf die Patenterteilung: **14.10.2009**
(21) Anmeldenummer: 03028831.0
(22) Anmeldetag: 15.12.2003
(51) Int. Cl.: F28D 7/10, F28F 1/02, F28F 1/04, B01D 53/26

(54) **Kältetrockner**
Cold dryer
Sécheur à froid

(30) Priorität: 24.12.2002 DE 10261922
(43) Veröffentlichungstag der Anmeldung: 30.06.2004
(73) Patentinhaber: Kaeser Kompressoren GmbH, 95450 Coburg (DE)
(72) Erfinder: Feisthauer, Michael, 96484 Meeder (DE)
(74) Vertreter: Zech, Stefan Markus

(56) Entgegenhaltungen:
- EP-A- 0 138 677
- EP-A- 0 582 835
- DE-A1- 10 030 627
- DE-A1- 19 949 476
- US-A- 3 861 165
- US-A- 4 646 819
- US-A- 5 228 504

## Beschreibung

Die Erfindung betrifft einen Kältetrockner, insbesondere Druckluftkältetrockner zur Trocknung eines gasförmigen Arbeitsfluids unter Abkühlung des gasförmigen Arbeitsfluids durch Einsatz eines Kältefluids nach den Merkmalen des Oberbegriffs von Patentanspruch 1 sowie ein Wärmetauscherelement nach dem Oberbegriff des Patentspruchs 24 oder 25.

Bei Kältetrocknern, insbesondere Druckluftkältetrocknern zur Trocknung eines gasförmigen Arbeitsfluids unter Abkühlung des gasförmigen Arbeitsfluids durch Einsatz eines Kältefluids passiert das Arbeitsfluid zunächst eine Vor-Wärmetauschersektion und anschließend eine Haupt-Wärmetauschersektion. In der Vor-Wärmetauschersektion erfolgt eine Abkühlung des an den Kältetrockner geführten Arbeitsfluids durch das getrocknete und gekühlte Arbeitsfluid in Gegenstromprinzip. In der Haupt-Wärmetauschersektion wird das Arbeitsfluid durch ein Kältefluid weiter abgekühlt, so dass Feuchtigkeit aus dem Arbeitsfluid auskondensiert und abgeführt werden kann.

Ein Kältetrockner nach dem Stand der Technik ist beispielsweise in der DE 100 30 627 A1 beschrieben.

Der vorliegenden Erfindung liegt die Aufgabe zugrunde, einen Kältetrockner anzugeben, der einen verbesserten Aufbau aufweist, insbesondere bei kompakter Bauweise einen effektiven Wärmeaustausch gewährleistet. Gleichzeitig sollen Wärmetauscherelemente angegeben werden, die einen solchermaßen effektiven Wärmeaustausch erzielen.

Diese Aufgabe wird mit einem Kältetrockner nach den Merkmalen des Patentanspruchs 1 sowie mit einem Wärmetauscherelement nach den Merkmalen der Patentansprüche 25 oder 26 gelöst. Vorteilhafte Weiterbildungen sind in den Unteransprüchen angegeben.

Ein Kerngedanke der vorliegenden Erfindung besteht darin, dass alle Strömungskanäle der Vor-Wärmetauschersektion und/oder der Haupt-Wärmetauschersektion im wesentlichen durch Hohlkammerprofile mit einer Mehrzahl von Wärmeführungskanälen und/oder von Kälteführungskanälen ausgebildet sind, wobei das wenigstens eine Wärmetauscherelement der Vor-Wärmetauschersektion und/oder der Haupt-Wärmetauschersektion endseitig in jeweils einem Anschlussprofil fluiddicht gehaltert und angeschlossen ist, wobei das Wärmetauscherelement als vorzugsweise langgestrecktes Rohrprofil ausgebildet ist und die Wärmeführungskanäle und Kälteführungskanäle sich entlang des Rohrprofils erstrecken und wobei die Wärmeführungskanäle und die Kälteführungskanäle durch integral mit dem Rohrprofil ausgebildete Trennwände voneinander getrennt sind. Dabei sind die Wärmeführungskanäle und die Kälteführungskanäle einander benachbart, jedoch alternierend angeordnet. Zweckmäßigerweise sind sowohl alle Strömungskanäle der Vor-Wärmetauschersektion und der Haupt-Wärmetauschersektion durch Hohlkammerprofile ausgebildet. Diese Profile können in einer weiteren Ausgestaltung der vorliegenden Erfindung darüber hinaus einen identischen Profilquerschnitt aufweisen, so dass durch die Verwendung identischer Profilquerschnitte eine erhebliche Kostenreduktion erzielt wird.

Weiterhin gestattet der vorgeschlagene Aufbau eine besonders kompakte Bauart, vor allem dann, wenn zwei oder mehr Wärmetauscherelemente endseitig in einem gemeinsamen Anschlussprofil fluiddicht gehaltert oder angeschlossen sind. Dieser Vorteil ist bereits dann gegeben, wenn zwei oder mehr Wärmetauscherelemente der Vor-Wärmetauschersektion oder der Haupt-Wärmetauschersektion jeweils endseitig in einem gemeinsamen Anschlussprofil fluiddicht gehaltert und angeschlossen sind. In einer zweckmäßigen Ausgestaltung sind

In einer besonders bevorzugten Ausgestaltung sind die Wärmeführungskanäle und/oder die Kälteführungskanäle quer zur Längserstreckung des Rohrprofils endseitig durch Öffnungen geöffnet, derart, dass zu bzw. Abströmung zu den Wärmeführungskanälen und/oder Kälteführungskanälen quer zur Längserstreckung des Rohrprofils erfolgt. In dieser Ausgestaltung ist eine einfache und zweckmäßige Anschlussmöglichkeit der Wärmeführungskanäle und/oder der Kälteführungskanäle realisierbar.

In einer besonders bevorzugten Ausgestaltung sind alle Wärmetauscherelemente der Vor-Wärmetauschersektion und der Haupt-Wärmetauschersektion endseitig in einem oder zwei gemeinsamen Anschlussprofilen fluiddicht gehaltert und angeschlossen.

Zweckmäßigerweise ist auch das Anschlussprofil im wesentlichen als Hohlkammerprofil ausgebildet.

In einer konkreten, zweckmäßigen Ausgestaltung wird die Anordnung aus Vor-Wärmetauschersektion, aus Haupt-Wärmetauschersektion sowie aus endseitig jeweils vorgesehenen Anschlussprofilen aus insgesamt mindestens vier Hohlkammerprofilen gebildet.

Es ist damit ein modularer Aufbau der Gesamtordnung vorgesehen. Dieser modularer Aufbau bzw. die Ausbildung von Vor- bzw. Haupt-Wärmetauschersektion bietet die Möglichkeit zur einfachen Kapazitätsanpassung durch Länge und/oder Anzahl der Tauscherrohre. Die Verbindung der Einzelbauteile kann ohne aufwändige Verbindungsverfahren vorgenommen werden.

In einer weiter bevorzugten Ausgestaltung liegen die mindestens vier Hohlprofile in Form lediglich zweier unterschiedlicher Typen vor, die sich in den Profilquerschnitten unterscheiden. Hierdurch kann der modulare Aufbau noch vereinfacht werden, da lediglich zwei verschiedene Typen von Profilquerschnitten vorgesehen werden müssen.

In einer vorteilhaften Weiterbildung der vorliegenden Erfindung ist das Anschlussprofil einstückig ausgebildet, was die Herstellungskosten weiter vermindert und gleichzeitig Anschluss- und Dichtigkeitsprobleme minimiert.

In einer vorteilhaften Weiterbildung umfasst das Anschlussprofil mindestens eine, vorzugsweise mindestens zwei Fluidführungskammern, die durch das Hohlkammerprofil des Anschlussprofils definiert sind. In dieser Ausgestaltung kann das Anschlussprofil selbst zur Führung des Fluids und zwar des Arbeitsfluids und/oder des Kältefluids eingesetzt werden, was jedoch keineswegs zwingend ist. Vielmehr sind auch separate Fluidführungen, insbesondere im Fall des Kältemittels, für die Haupt-Wärmetauschersektion denkbar.

In einer besonders bevorzugten Ausgestaltung ist das Anschlussprofil als Strangpressprofil, insbesondere als Aluminiumstrangpressprofil ausgebildet. Diese Art der Ausbildung erlaubt eine kostengünstige und reproduzierbare Herstellung.

Nach einem zweckmäßigen, keineswegs jedoch zwingenden Aspekt der vorliegenden Erfindung sind an beiden Enden der Wärmetauscherelemente endseitig entsprechende Anschlussprofile vorgesehen. Diese Anschlussprofile können nach einem weiteren, vorteilhaften Aspekt der vorliegenden Erfindung über starre Verspannungselemente miteinander verspannt sein.

In einer konkreten, einfachen aber vorteilhaften Ausgestaltung sind die Verspannungselemente als Stangen ausgebildet.

Nach einem weiteren Aspekt der vorliegenden Erfindung können die Stangen zumindest teilweise durch die Wärmetauscherelemente geführt sein. Hierdurch ergibt sich eine besonders zweckmäßige Verspannung, da relativ gleichmäßig auf die Wärmetauscherelemente eingewirkt wird.

Selbstverständlich können an Stelle der starren Verspannungselemente auch andere Verbindungstechniken zum Einsatz gelangen, zweckmäßigerweise lösbare Verbindungstechniken.

Nach einem konkreten Aspekt der vorliegenden Erfindung ist das wenigstens eine vorzugsweise langgestreckte Wärmetauscherelement endseitig derart im Anschlussprofil gelagert, dass die Vorzugsrichtungen des Wärmetauscherelements und des Anschlussprofils im wesentlichen orthogonal zueinander verlaufen.

Nach einem weiteren bevorzugten Aspekt der vorliegenden Erfindung sind die Anschlussprofile aus dem gleichen Grundmaterial wie die Wärmetauscherelemente gebildet. Auch dies verringert Herstellungskosten und beseitigt Materialanpassungsprobleme. Im Fall von Metall als verwendeten Material entsteht auch kein Spannungspotential, was bei Verwendung unterschiedlicher Materialien Probleme hervorrufen könnte. Besonders bevorzugt wird eine Ausbildung in Aluminium.

So erscheint es zunächst als vorteilhafte Ausgestaltung, das Rohrprofil als einstückiges Profil, vorzugsweise als Aluminiumstrangpressprofil auszubilden. Aluminium ist sowohl für den Betrieb mit gasförmigen als vor allem auch mit flüssigen Fluiden ein bevorzugtes Material, das sich darüber hinaus leicht bearbeiten lässt. In einer konkreten, wiederum äußerst bevorzugten Ausgestaltung ist das Wärmetauscherelement als einstückiges Profil ausgebildet. Durch die einstückige Ausbildung werden die Herstellungs- sowie Montagekosten erheblich verringert. Darüber hinaus sind Dichtigkeitsprobleme zwischen den einzelnen Kanälen bzw. nach außen praktisch nicht zu befürchten.

Nach einem weiteren bevorzugten Aspekt der vorliegenden Erfindung können die Öffnungen der Wärmeführungskanäle und/oder die Öffnungen der Kälteführungskanäle endseitig am Rohrprofil im wesentlichen in einer Ebene liegen. Hiernach kann es zum einen vorgesehen sein, die Öffnungen einer Gruppe von Kanälen im wesentlichen in einer Ebene anzuordnen. Alternativ oder zusätzlich können auch die Öffnungen der zweiten Art von Kanälen in einer (anderen) Ebene angeordnet sein. Besonders bevorzugt ist es, die Öffnungen beider Arten von Kanäle in einer Ebene vorzusehen, wobei in dieser Ausgestaltung beispielsweise die Öffnungen einer Art von Kanälen an einer Innenseite des Rohrprofils und die Öffnungen der anderen Art von Kanälen an einer Außenseite des Rohrprofils vorgesehen sein können.

Nach einem weiteren, vorteilhaften Aspekt der vorliegenden Erfindung sind die Trennwände zwischen Wärmeführungskanälen und Kälteführungskanälen zumindest an einer Seite, vorteilhafterweise beidseitig zur Vergrößerung der Wärmetauscherfläche mit Profilierungen, insbesondere Rippen versehen. Derartige Rippen oder Profilierungen vergrößern den Wärmeübertragungsfluss und können bei Ausbildung des Rohrprofils als Strangpressprofil ohne größeren herstellungstechnischen Aufwand mit ausgebildet werden.

In einer weiteren bevorzugten Ausgestaltung sind die Wärmeführungskanäle und die Kälteführungskanäle um einen längs des Wärmetauscherelements verlaufenden zentralen Kanal herum angeordnet.

In einer konkreten, bevorzugten Ausgestaltung steht der zentrale Kanal endseitig über Öffnungen mit den Wärmeführungskanälen oder den Kälteführungskanälen in Fluidverbindung und ist zur Mitte des Rohrprofils hin über ein Dichtelement verschlossen. Das Dichtelement soll bewirken, dass das Fluid auch vom zentralen Kanal durch die vorgesehenen Wärmeführungskanäle oder Kälteführungskanäle strömen muss und nicht durch den zentralen Kanal von einem Ende des Wärmetauscherelements zum anderen Ende des Wärmetauscherelements gelangen kann.

Nach einem weiteren bevorzugten Aspekt der vorliegenden Erfindung weist das Wärmetauscherelement mindestens jeweils zwei Wärmeführungskanäle und Kälteführungskanäle auf. Die Unterteilung des Rohrprofils in eine Mehrzahl von Segmenten erscheint sinnvoll, da dadurch die Wandflächen und damit die gesamte Wärmeübertragungsrate erhöht werden kann.

In einer ersten konkreten Ausgestaltung können die Wärmeführungskanäle und/oder die Kälteführungskanäle, senkrecht zu ihrer Längserstreckung, einen im wesentlichen kreissegmentförmigen Querschnitt aufweisen. Alternativ hierzu können die Trennwände zwischen den Wärmeführungskanälen und/oder Kälteführungskanälen aber auch zur Vergrößerung der Wärmetauscherfläche einen gekrümmten oder geknickten Verlauf aufweisen.

In einer konkreten Ausgestaltung können die Trennwände im Querschnitt zur Längserstreckung des Wärmetauscherelements einen spiralarmartigen Verlauf aufweisen.

Um eine für die Wärmeübertragungsrate günstige Verwirbelung in den Wärmeführungs- bzw. Kälteführungskanälen zu erzeugen und/oder um die effektive Länge der Wärmeführungskanäle bzw. Kälteführungskanäle zu verlängern kann das Profil in axialer Richtung schraubenförmig gedreht ausgebildet sein, d. h. die Wärmeführungskanäle bzw. Kälteführungskanäle winden sich schraubenartig um eine zentrale Achse.

Nach einem weiteren unabhängigen Grundgedanken der vorliegenden Erfindung wird auch ein Wärmetauscherelement für flüssige oder gasförmige Medien vorgeschlagen, das insbesondere in einem erfindungsgemäßen Kältetrockner eingesetzt werden kann. Das hier beschriebene Wärmetauscherelement ist jedoch keinesfalls auf den Einsatzfall "Kältetrockner beschränkt" sondern kann auch bei jedem anderen erdenklichen Einsatzbereich Verwendung finden.

Das Wärmetauscherelement ist nach einem ersten unabhängigen Aspekt der vorliegenden Erfindung dabei als vorzugsweise langgestrecktes Rohrprofil ausgebildet und umfasst mehrere sich entlang des Rohrprofils erstreckende Wärmeführungskanäle und Kälteführungskanäle. Die Wärme- und Kälteführungskanäle sind dabei einander benachbart, jedoch alternierend angeordnet, wobei die Wärmeführungskanäle und die Kälteführungskanäle durch integral mit dem Rohrprofil ausgebildete Trennwände voneinander getrennt sind. Ein besonderes Merkmal dieser Ausgestaltung besteht darin, dass die Außenwandungen der Wärmeführungskanäle oder der Kälteführungskanäle gegenüber den Außenwandungen der Kälteführungskanäle oder der Wärmeführungskanäle zumindest an einer Außenseite oder Innenseite im Querschnitt vorstehend ausgebildet sind.

Dies ermöglicht insbesondere ein einfaches und reproduzierbares Ausbilden von Öffnungen an den vorstehenden Wärmeführungskanälen oder Kälteführungskanälen. Dies kann nach einem bevorzugten Aspekt der Erfindung durch Materialabtragen erfolgen, wobei bei einer kreisförmigen Ausgestaltung des Querschnitts des Rohrprofils ein bereichsweises Abdrehen der Öffnungen vorgenommen werden kann. In einer anderen Grundform, insbesondere einer im Wesentlichen ebenen Grundform könnte ein derartiges Materialabtragen auch durch Abfräsen oder Abschleifen bewirkt werden. Öffnungen lassen sich natürlich auch durch Einbringung von Bohrungen, etc. erzeugen.

Nach einem weiteren unabhängigen Aspekt der vorliegenden Erfindung können - dies auch unabhängig von der im Querschnitt vorstehenden Ausbildung der Außenwandungen der Wärmeführungskanäle oder der Kälteführungskanäle - bei einem Wärmetauscherelement, der vorzugsweise als langgestrecktes Rohrprofil ausgebildet ist und mehrere sich entlang des Rohrprofils erstreckende Wärmeführungskanäle und Kälteführungskanäle umfasst, wobei die Wärmeführungskanäle und die Kälteführungskanäle einander benachbart, jedoch alternierend angeordnet sind, wobei die Wärmeführungskanäle und die Kälteführungskanäle durch integral mit dem Rohrprofil ausgebildete Trennwände voneinander getrennt sind, die Wärmeführungskanäle und die Kälteführungskanäle quer zur Längserstreckung des Rohrprofils endseitig durch Öffnungen geöffnet sein, derart, dass Zu- bzw. Abströmung zu den Wärmeführungskanälen und Kälteführungskanälen quer zur Längserstrekkung des Rohrprofils erfolgt, wobei ferner Öffnungen der Wärmeführungskanäle gegenüber den Öffnungen der Kälteführungskanäle in Längserstrekkung des Rohrprofils versetzt angeordnet sind. Auch in dieser Ausgestaltung ist eine zweckmäßige Anschlussmöglichkeit des Wärmetauscherelementes gegeben.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: den prinzipiellen Aufbau eines an sich bekannten Kältetrockners;
- Fig. 2: eine Ausführungsform einer Vor- und einer Haupt-Wärmetauschersektion eines Kältetrockners nach der Erfindung;
- Fig. 3: eine perspektivische Ansicht einer Ausführungsform eines Anschlussprofils eines Kältetrockners nach der Erfindung;
- Fig. 4: einen Querschnitt des Anschlussprofils nach Fig. 3;
- Fig. 5: eine perspektivische Ansicht des Anschlussprofils nach Fig. 3 zur Veranschaulichung seiner den Wärmetauscherelementen abgewandten Seite;
- Fig. 6: einen Querschnitt einer Ausführungsform eines Wärmetauscherelements des erfindungsgemäßen Kältetrockners;
- Fig. 7: eine perspektivische Ansicht des Wärmetauscherelements nach Fig. 6;
- Fig. 8: ein beidseitig in Anschlussprofilen gehaltertes Wärmetauscherelement nach Fig. 7;
- Fig. 9: einen Querschnitt einer Verbindungsstelle von Anschlussprofil und Wärmetauscherelement nach Fig. 8;
- Fig. 10: eine perspektivische Ansicht der Verbindungsstelle von Anschlussprofil und Wärmetauscherelement nach Fig. 9;
- Fig. 11: eine perspektivische Ansicht einer Verbindungsstelle von Anschlussprofil und Fluidleitung;
- Fig. 12: eine abgewandelte Ausführungsform eines Wärmetauscherelements;
- Fig. 13: einen Querschnitt eines Wärmetauscherelements mit geneigten Trennwänden;
- Fig. 14: einen Querschnitt eines Wärmetauscherelements mit gekrümmten Trennwänden;
- Fig. 15: einen Querschnitt eines weiteren Wärmetauscherelements mit gekrümmten Trennwänden;
- Fig. 16: einen Querschnitt eines weiteren Wärmetauscherelements mit gekrümmten Trennwänden;
- Fig. 17: einen Querschnitt eines Wärmetauscherelements mit geknickten Trennwänden ;
- Fig. 18: ein Wärmetauscherelement mit ovalem Querschnitt;
- Fig. 19: ein Wärmetauscherelement mit rechteckigem Querschnitt;
- Fig. 20: ein Wärmetauscherelement mit dreieckigem Querschnitt;
- Fig. 21: eine weitere abgewandelte Ausführungsform eines Wärmetauscherelements;
- Fig. 22: eine nochmals abgewandelte Ausführungsform des Wärmetauscherelements nach Fig. 21.
- Fig. 23: eine weitere abgewandelte Ausführungsform eines Wärmetauscherelements;
- Fig. 24: eine weitere Ausführungsform einer Vor- und einer Haupt-Wärmetauschersektion eines Kältetrockners nach der Erfindung;

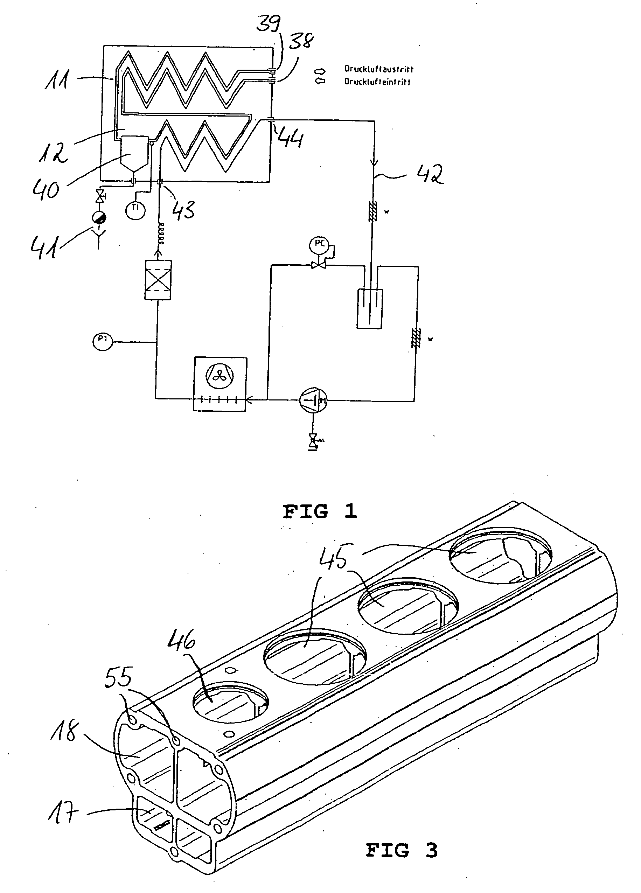

Fig. 1 zeigt den prinzipiellen Aufbau eines an sich bekannten Kältetrockners. Der Kältetrockner umfasst eine Vor-Wärmetauschersektion 11 und eine Haupt-Wärmetauschersektion 12 sowie einen Kondensatabscheider 40 und einen Kältefluidkreislauf 42.

Das gasförmige Arbeitsfluid wird über einen Arbeitsfluideintritt 38 zunächst in die Vor-Wärmetauschersektion 11 geführt. In der Vor-Wärmetauschersektion 11 erfolgt eine erste Abkühlung des Arbeitsfluids durch das bereits gekühlte und getrocknete Arbeitsfluid aus der Haupt-Wärmetauschersektion 12. Das vorgekühlte Arbeitsfluid gelangt anschließend in die Haupt-Wärmetauschersektion 12, in der es noch weiter abgekühlt wird, vorzugsweise unter den Taupunkt der mitgeführten Feuchte, sodass die Feuchte im Arbeitsfluid zumindest teilweise auskondensiert. Das Kondensat wird nach dem Austritt aus der Haupt-Wärmetauschersektion 12 am Kondensatabscheider 40 abgeschieden und dem Kondensatablass 41 zugeführt. Das gekühlte und getrocknete Arbeitsfluid gelangt in die Vor-Wärmetauschersektion 11, wo es als Kältefluid für das ungekühlte und feuchte Arbeitsfluid eingesetzt wird. Das gekühlte und getrocknete Arbeitsfluid wird dabei wieder auf eine vorbestimmte gewünschte Ausgangstemperatur erwärmt und verlässt anschließend den Kältetrockner über einen Arbeitsfluidaustritt 39.

In der Haupt-Wärmetauschersektion 12 kann sowohl ein flüssiges als auch ein gasförmiges Kältefluid eingesetzt werden. Das Kältefluid wird über einen Kältefluideintritt 43 in die Haupt-Wärmetauschersektion 12 geführt, wo es das vorgekühlte Arbeitsfluid kühlt und sich dabei gleichzeitig erwärmt. Nach Verlassen der Haupt-Wärmetauschersektion 12 über einen Kältfluidaustritt 44 wird das Kältefluid in den Kältefluidkreislauf 42 geführt.

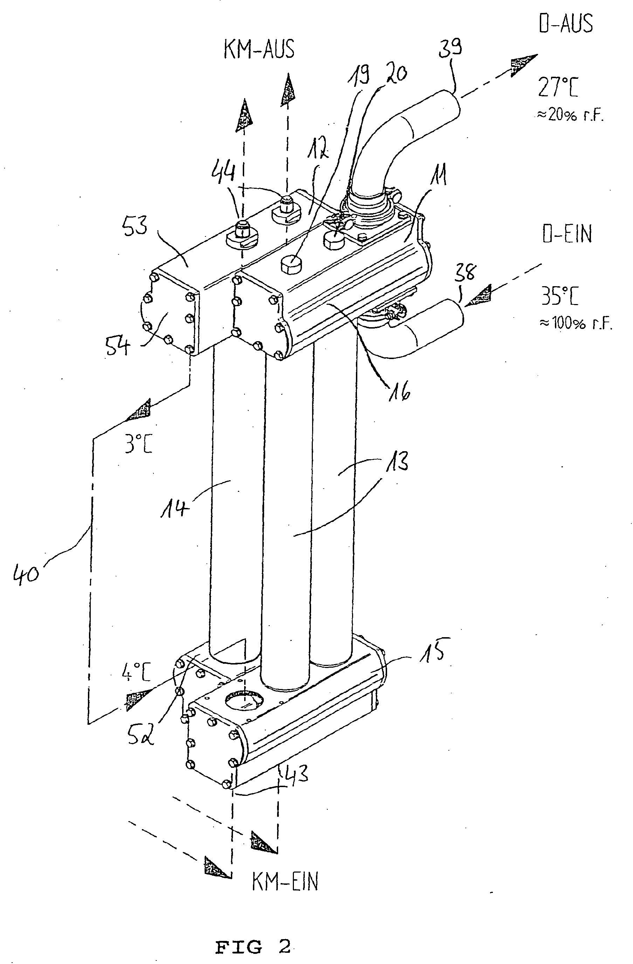

Fig. 2 stellt eine zweckmäßige Ausführungsform der Vor-Wärmetauschersektion 11 und der Haupt-Wärmetauschersektion 12 eines Kältetrockners nach der Erfindung dar, der im übrigen gemäß Fig. 1 aufgebaut sein kann. Die ― im vorliegenden Fall langgestreckten - Wärmetauscherelemente 13, 14 der Vor-Wärmetauschersektion 11 und der Haupt-Wärmetauschersektion 12 sind an beiden Enden jeweils in einem Anschlussprofil 15, 16, 52, 53 fluiddicht gehaltert und angeschlossen. Obwohl die Wärmetauscherelemente 13, 14 in den hier gezeigten Ausführungsbeispielen langgestreckt ausgebildet sind, ist es auch denkbar, das gesamte Wärmetauscherrohr jeweils spiralförmig aufzuwickeln. Der Vorteil dabei besteht darin, dass sich ein kleinerer Bauraum für das Wärmetauscherrohr ergibt. Seine Funktionstüchtigkeit bleibt bei der spiralförmigen Aufwicklung im wesentlichen unbeeinflusst. Die spiralförmige Anordnung von Wärmetauscherrohren ist allerdings bereits gängige Praxis, so dass ein Fachmann die Gedanken der vorliegenden Erfindung auch auf eine derartige Ausbildung von Wärmetauscherrohren übertragen kann. In der vorliegenden Ausführungsform sind die an den Enden der Wärmetauscherelemente 13, 14 der Vor-Wärmetauschersektion 11 und der Haupt-Wärmetauschersektion 12 befindlichen Anschlussprofile 15, 16, 52, 53 parallel und paarweise in ihrer Längserstreckung aneinander angrenzend angeordnet. Dabei sind die Anschlussprofile 15, 16, 52, 53 an der angrenzend Seite abgeflacht. Die Anschlussprofile 16 und 53 bzw. 15 und 52 können dann auch miteinander verbunden werden, beispielsweise durch Verschrauben. Öffnungen (in Fig. 2 nicht gezeigt) in der aneinander angrenzenden Seite der Anschlussprofile 15 und 52 bzw. 16 und 53, beispielsweise durch Bohrungen erzeugt, können dann ermöglichen, dass das Arbeitsfluid von der Vor-Wärmetauschersektion 11 in die Haupt-Wärmetauschersektion 12 gelangt und umgekehrt.

Die Anschlussprofile 15, 16, 52, 53 sind an beiden Enden mit Endplatten 54 verschlossen. Die Endplatten 54 sind mit den Anschlussprofilen 15, 16, 52, 53 verschraubt und mit einer Dichtung (in Fig. 2 nicht gezeigt) abgedichtet. Die Anschlussprofile 15, 16, 52, 53 sind mit starren Verspannungselementen 19, 20 in Form von durch die Wärmetauscherelemente geführten Stangen miteinander verspannt.

Über die Anschlussprofile 15, 16 der Vor-Wärmetauschersektion 11 erfolgt die Zu- und Abführung des ungekühlten bzw. vorgekühlten sowie des getrockneten Arbeitsfluids zu bzw. von den Wärmetauscherelementen 13 sowie die Verteilung des ungekühlten sowie des getrockneten Arbeitsfluids auf die Wärmetauscherelemente 13.

Über die Anschlussprofile 52, 53 der Haupt-Wärmetauschersektion 12 erfolgt die Zu- und Abführung des vorgekühlten bzw. des gekühlten Arbeitsfluids zu bzw. von den Wärmetauscherelementen 14 sowie die Verteilung des vorgekühlten Arbeitsfluids auf die Wärmetauscherelemente 14. Das Kältefluid kann ebenfalls über die Anschlussprofile 52, 53 zu bzw. von den Wärmetauscherelementen 14 zu- bzw. abgeführt werden. In der vorliegenden Ausführungsform wird das Kältefluid jedoch über den Kältefluideintritt 43 direkt auf die Wärmetauscherelemente 14 geführt und verlässt diese direkt über den Kältefluidaustritt 44. Kältefluideintritt 43 und Kältefluidaustritt 44, können beispielsweise als orthogonal zur Längsachse der Anschlussprofile 52, 53 verlaufender Kanal gebildet sein, der das Kältefluid durch die Anschlussprofile 52, 53 auf die Wärmetauscherelemente 14 führt.

Das Arbeitsfluid tritt am Arbeitsfluideintritt 38 mit einer Temperatur von beispielsweise 35 °C in die Vor-Wärmetauschersektion 11 ein und wird über das Anschlussprofil 16 auf die in der vorliegenden Ausführungsform parallel angeordneten und geschalteten Wärmetauscherelemente 13 geführt. Dort wird es im Gegenstrom am bereits gekühlten und getrockneten Arbeitsfluid vorbeigeführt und abgekühlt. Das bereits gekühlte und getrocknete Arbeitsfluid erwärmt sich dabei von 4 °C auf 27 °C und verlässt die Vor-Wärmetauschersektion 11 über das Anschlussprofil 16 und den Arbeitsfluidaustritt 39. Das vorgekühlte Arbeitsfluid aus der Vor-Wärmetauschersektion 11 wird nun über das Anschlussprofil 15 in das Anschlussprofil 52 geführt und von dort auf die sowohl anschlusstechnisch als auch geometrisch parallel angeordneten Wärmetauscherelemente 14 der Haupt-Wärmetauschersektion 12 verteilt. In den Wärmetauscherelementen 14 wird das vorgekühlte Arbeitsfluid im Gleichstrom am Kältefluid vorbeigeführt, das über den Kältefluideintritt 43 in die Wärmetauscherelemente 14 gelangt. Das vorgekühlte Arbeitsfluid wird in der Haupt-Wärmetauschersektion 12 auf 3 °C abgekühlt, wobei die mitgeführte Feuchte zu einem großen Teil auskondensiert. Gekühltes Arbeitsfluid und Kondensat verlassen die Haupt-Wärmetauschersektion 12 über das Anschlussprofil 53 zum Kondensatabscheider 40. Das gekühlte und getrocknete Arbeitsfluid, das eine Temperatur von 4 °C aufweist, wird anschließend über das Anschlussprofil 15 auf die Wärmetauscherelemente 13 der Vor-Wärmetauschersektion 11 geführt. Das Kältefluid verlässt die Haupt-Wärmetauschersektion 12 über den Kältefluidaustritt 44.

Fig. 3 zeigt eine Ausführungsform eines Anschlussprofils des Kältetrockners in perspektivischer Ansicht. Das Anschlussprofil ist einstückig ausgebildet und umfasst zwei Fluidführungskammern 17, 18 zur Führung des Arbeitsfluids sowie gegebenenfalls auch des Kältefluids.

Das Anschlussprofil weist an der den Wärmetauscherelementen 13, 14 zugewandten Seite mehrere Öffnungen 45 zum Einsetzen bzw. Durchführen von Wärmetauscherelementen 13, 14 und eine Öffnung 46 zum Anschluss einer Fluidleitung (in Fig. 3 nicht gezeigt) auf. Gewindebohrungen 55 an der Stirnseite des Anschlussprofils dienen dazu das Anschlussprofil mit der Endplatte 54 zu verschrauben und damit nach außen abzudichten. In der Endplatte 54 sind hierfür Bohrungen 56 vorgesehen.

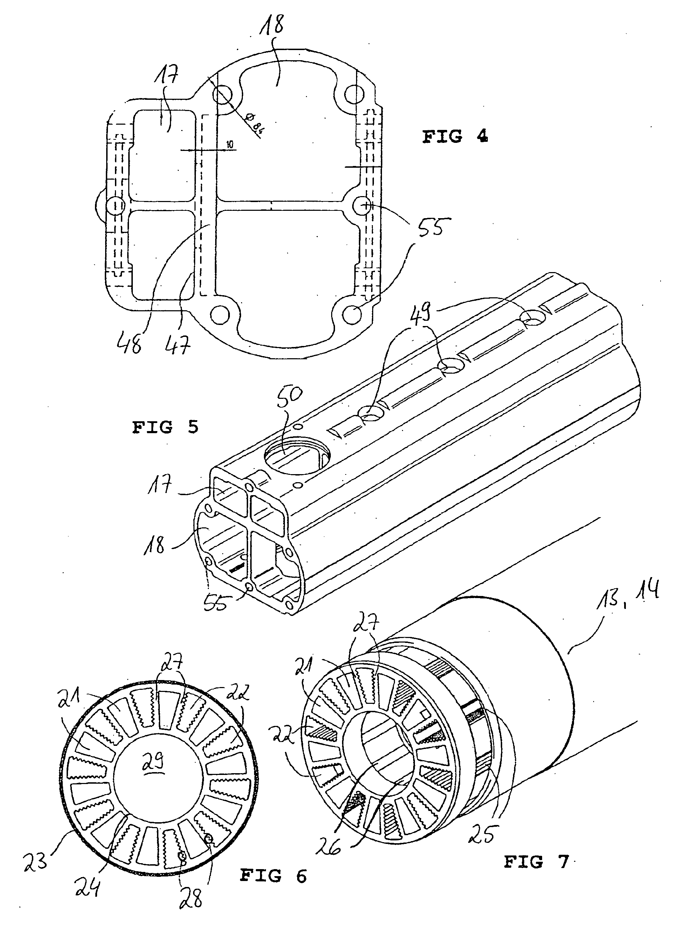

Die Fluidführungskammern 17, 18 sind durch eine Zwischenwand 47 voneinander getrennt, die Öffnungen 48 aufweist, in die die Wärmetauscherelemente 13, 14 eingesetzt bzw. angelegt und durch die die Verspannungselemente 19, 20 in Form von Stangen durchgeführt werden können (Fig. 4).

Fig. 5 zeigt eine perspektivische Ansicht der den Wärmetauscherelementen 13, 14 abgewandten Seite des Anschlussprofils nach Fig. 3. Auf dieser Seite weist des Anschlussprofil mehrere Öffnungen 49 zum Durchführen der Verspannungselemente 19, 20 sowie eine weitere Öffnung 50 zum Anschluss einer Fluidleitung (in Fig. 5 nicht gezeigt) auf. Wird das Anschlussprofil beispielsweise an einer oder an den beiden geschlossenen Längsseiten abgeflacht, so dass sich ein rechteckiger Querschnitt ergibt, lassen sich mehrere solcher Anschlussprofile sehr platzsparend an der geschlossenen Längsseite aneinander angrenzend anordnen. Die Fluidführungskanäle der aneinander angrenzenden Anschlussprofile können dann durch Öffnungen miteinander verbunden sein (in Fig. 5 nicht gezeigt).

Fig. 6 stellt einen Querschnitt eines Wärmetauscherelements des erfindungsgemäßen Kälttrockners dar. Im Wärmetauscherelement sind Wärmeführungskanäle 21 und Kälteführungskanäle 22 einander benachbart und alternierend angeordnet und durch Trennwände 27 voneinander abgegrenzt. Die alternierend angeordneten Wärmeführungskanäle 21 und Kälteführungskanäle 22 bilden einen geschlossenen Ring um eine zentrale Achse, in der vorliegenden Ausführungsform ein zentraler Kanal 29. Konkret definiert die alternierende Abfolge von Wärmeführungskanälen und Kälteführungskanälen eine konzentrisch symmetrische Anordnung um die zentrale Achse bzw. den zentralen Kanal 29 des hier kreisförmigen Wärmetauscherelements. Der geschlossenen Ring aus Wärmeführungskanälen 21 und Kälteführungskanälen 22 weist eine Außenseite 23 und einer Innenseite 24 auf. Für einen verbesserten Wärmeübergang durch eine vergrößerte Wärmetauscherfläche sind in der vorliegenden Ausführungsform die Kälteführungskanäle 22 mit Rippen 28 versehen. Für eine vergrößerte Wärmetauscherfläche können auch ausschließlich die Wärmeführungskanäle 21 oder beide Fluidkanäle mit Profilierungen bzw. Rippen ausgebildet sein (in Fig. 6 nicht gezeigt).

Die Wärmeführungskanäle 21 sind zur Innenseite 24 hin im Querschnitt vorstehend ausgebildet und die Kälteführungskanäle 22 sind zur Außenseite 23 hin im Querschnitt vorstehend ausgebildet. In einer weiteren Ausführungsform ist auch eine umgekehrt vorstehende Anordnung der Wärmeführungskanäle 21 und Kälteführungskanäle 22 im Querschnitt oder eine Anordnung der Fluidkanäle auf gleicher Höhe im Querschnitt möglich (in Fig. 6 nicht gezeigt).

Durch bereichsweises Abdrehen der Wandungen an der Außenseite 23 und an der Innenseite 24 des hier langgestreckten Rohprofils entstehen Öffnungen 25, 26 durch die das Arbeitsfluid und gegebenenfalls das Kältefluid in das Wärmetauscherelement 13, 14 ein- bzw. ausströmen kann (Fig. 7). Die Wärmeführungskanäle 21 weisen in der vorliegenden Ausführungsform endseitig Öffnungen 26 zur Innenseite 24 des Wärmetauscherelements 13, 14 auf. Die Kälteführungskanäle 22 besitzen endseitige Öffnungen 25 zur Außenseite 23 des Wärmetauscherelements 13. Es ist ebenfalls möglich, dass die Kälteführungskanäle 22 zur Innenseite 24 hin und die Wärmeführungskanäle 21 zur Außenseite 23 hin geöffnet sind (in Fig 7 nicht gezeigt) oder dass die Öffnungen beider Kanäle zur gleichen Seite, innen oder außen, hin führen, aber in unterschiedlichen Ebenen quer zur Längserstreckung der Wärmetauscherelemente 13, 14 angeordnet sind (in Fig 7 nicht gezeigt).

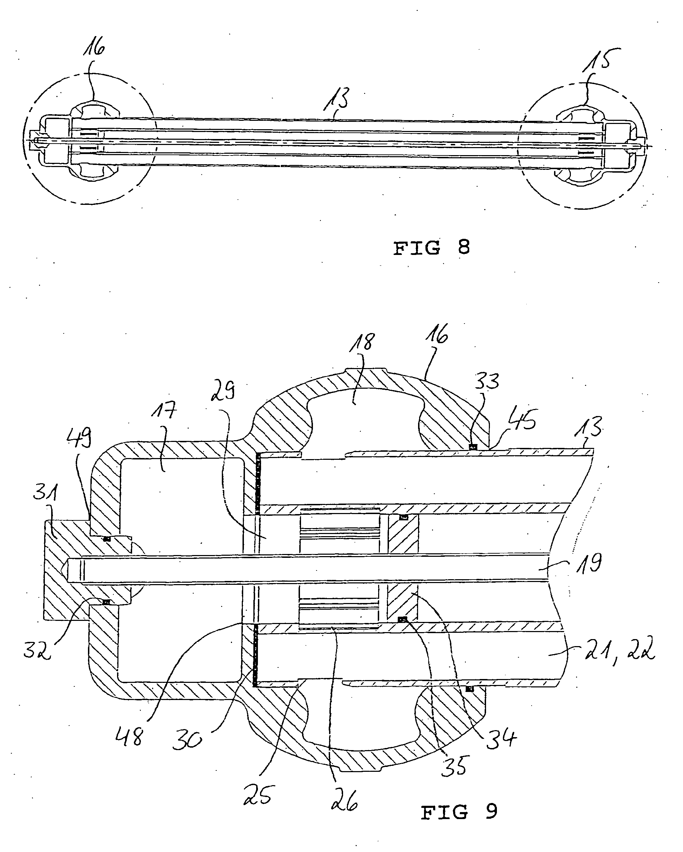

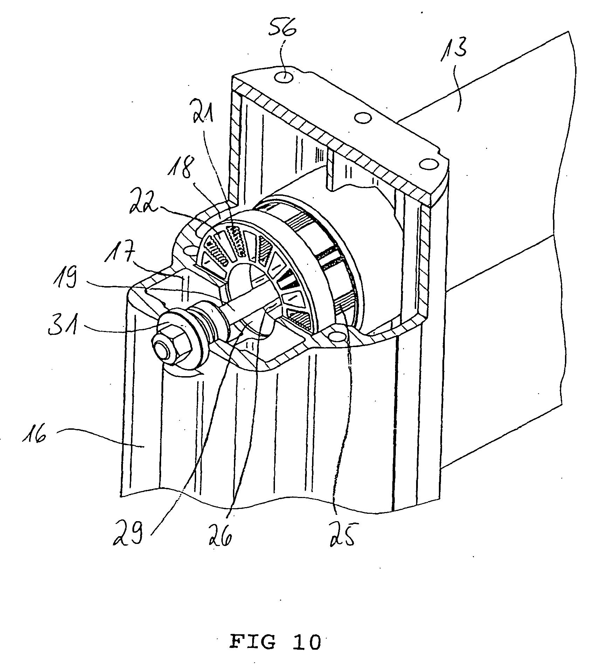

Das Wärmetauscherelement 13 ist im Kältetrockner beidseitig in Anschlussprofilen 15, 16 gehaltert und angeschlossen (Fig. 8). Fig. 9 zeigt den Querschnitt einer Verbindungsstelle des Anschlussprofils 16 mit dem Wärmetauscherelement 13 nach Fig. 8. Das Wärmetauscherelement 13 ist durch die Öffnung 45 im Anschlussprofil 16 durchgeführt und an die Öffnung 48 angelegt. Die Wärmeführungskanäle 21 und die Kälteführungskanäle 22 sind an der Stirnseite des Wärmetauscherelements 13 gegen den Fluidkanal 17 mit einer Dichtung 30 abgedichtet. Der zentrale Kanal 29 steht mit den Wärmeführungskanälen 21 oder den Kälteführungskanälen 22 in Fluidverbindung und ist zur Mitte des Rohrprofils hin über ein ringförmiges Dichtelement 34 mit einem Dichtungsring 35 verschlossen. Das Fluid ist so gezwungen vom zentralen Kanal 29 durch die vorgesehenen Wärmeführungskanäle 21 oder Kälteführungskanäle 22 zu strömen. Ein Dichtungsring 33 in der Öffnung 45 des Anschlussprofils 16 dichtet die Fluidkammer 18 nach außen ab. Das Verspannungselement 19 führt durch das ringförmige Dichtelement 34, den zentralen Kanal 29, die Öffnung 48, die Fluidkammer 17 und die Öffnung 49, in der es mit einem Spannelement 31 befestigt ist. Ein weiterer Dichtungsring 32 am Spannelement 31 dichtet die Fluidkammer 17 nach außen ab. Über den Fluidkanal 18 kann das Arbeitsfluid oder gegebenenfalls das Kältefluid durch die Öffnungen 25, 26 in die Kälteführungskanäle 22 oder Wärmeführungskanäle 21 ein- bzw. ausströmen. Über den Fluidkanal 17 und den zentralen Kanal 29 kann das Arbeitsfluid und gegebenenfalls das Kältefluid durch die Öffnungen 26, 25 in die Wärmeführungskanäle 21 oder Kälteführungskanäle 22 ein- bzw. austreten. Fig. 10 veranschaulicht die Verbindungsstelle des Anschlussprofils 16 mit dem Wärmetauscherelement 13 in einer perspektivischen Ansicht.

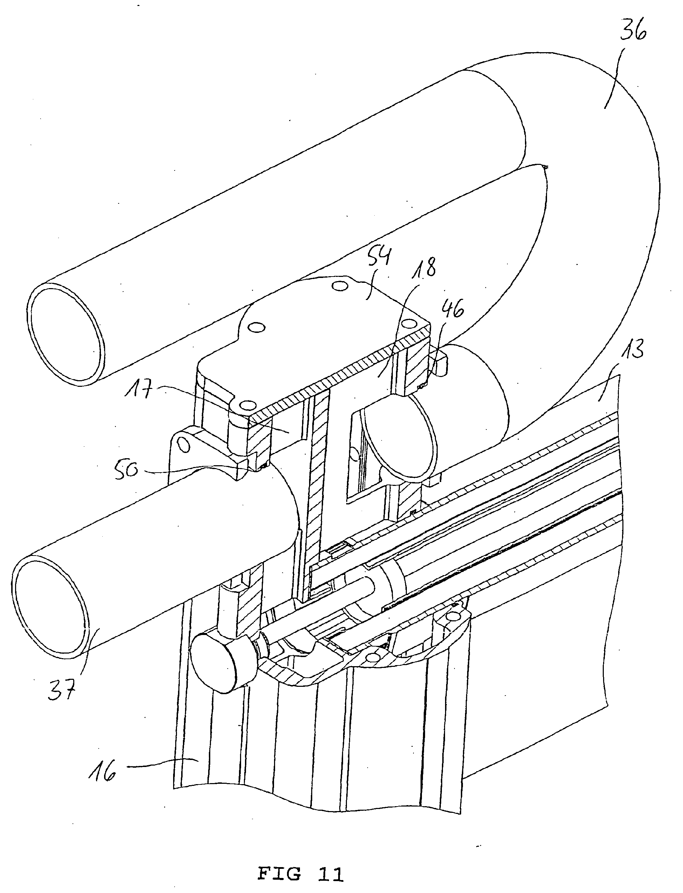

Die Zu- und Abführung des Arbeitsfluids und gegebenenfalls des Kältefluids zum bzw. vom Anschlussprofil 16 erfolgt über Fluidleitungen 36, 37 (Fig. 11). Die Fluidleitung 36 ist in der Öffnung 46 der Fluidkammer 18 angebracht. Die Fluidleitung 37 ist über die Öffnung 50 mit der Fluidkammer 17 verbunden.

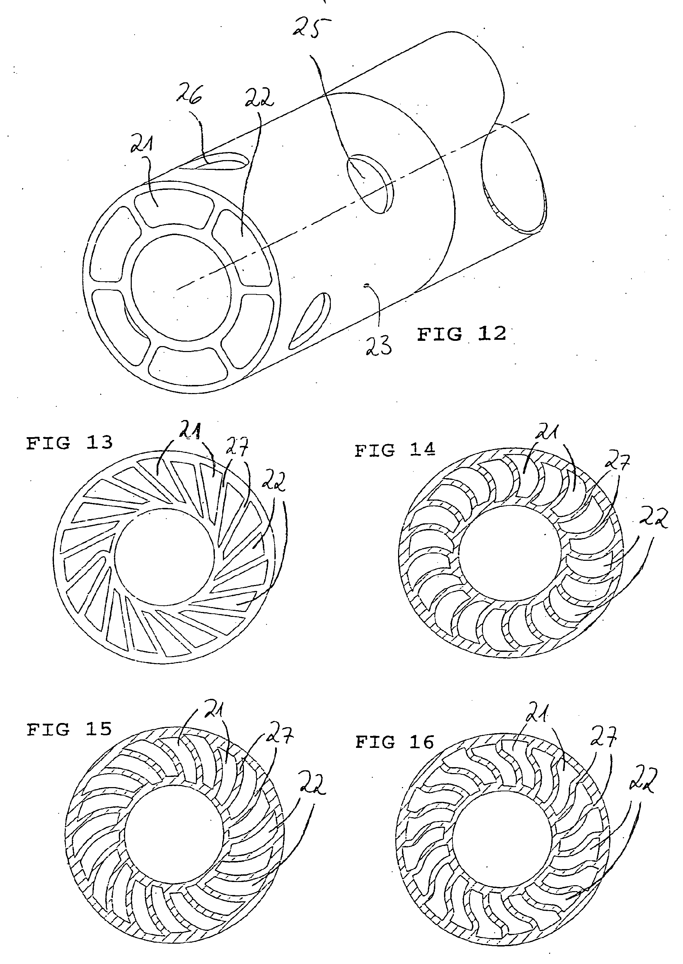

In einer abgewandelten Ausführungsform des Wärmetauscherelements 13 können die Öffnungen 25, 26 der Wärmeführungskanäle 21 und der Kälteführungskanäle 22 auch gemeinsam an einer Seite des Wärmetauscherelementes 13 angebracht sein, beispielsweise an der Außenseite 23 (Fig. 12). Die Öffnungen 25 sind dann entlang der Längsachse des Wärmetauscherelements 13 in einer anderen Ebene angeordnet als die Öffnungen 26 und werden zum Beispiel durch Einbringen von Bohrungen erzeugt.

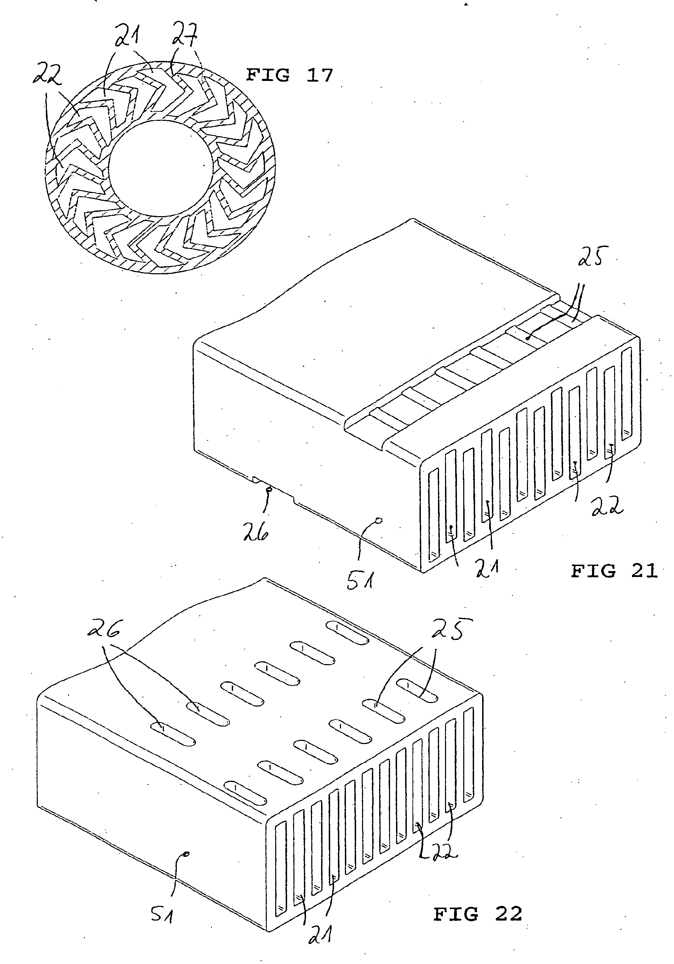

In einer weiteren abgewandelten Ausführungsform können die Trennwände 27 zwischen den Wärmeführungskanälen 21 und den Kälteführungskanälen 22 auch einen geneigten Verlauf aufweisen (Fig. 13). Dadurch wird die zum Wärmeübergang zur Verfügung stehende Oberfläche vergrößert, sodass ein verbesserter Wärmeaustausch stattfinden kann. Außerdem können durch diese Ausführungsform der Wärmetauscherelemente Turbulenzen bzw. Verwirbelungen im Strömungsprofil erzeugt werden, wodurch eine sehr effektive Wärmeübertragung erreicht wird. Sind die Wärmeführungskanäle 21 und die Kälteführungskanäle 22 im Profil in axialer Richtung schraubenförmig gedreht ausgebildet (in Fig. 13 nicht gezeigt), treten die Verwirbelungen in verstärkter Form auf, wodurch auch die Effizienz der Wärmeübertragung nochmals erhöht werden kann. Zur Vergrößerung der Wärmetauscherflächen und zur Erzeugung von Verwirbelungen im Strömungsprofil können die Trennwände 27 zwischen den Wärmeführungskanälen 21 und den Kälteführungskanälen 22 auch einen gekrümmten oder geknickten Verlauf aufweisen (Fig. 14 bis Fig. 17). Je stärker die Krümmung ausgeprägt ist, desto größer wird die zur Wärmeübertragung nutzbare Oberfläche. Die Stärke der Krümmung nimmt auch Einfluss auf den Grad der Verwirbelungen. Im Fall eines zweifach gekrümmten Verlaufes (Fig. 16) oder eines geknickten Verlaufes (Fig. 17) werden besonders starke Verwirbelungen für einen effektiven Wärmeübergang erzeugt. Mit einem zweifach gekrümmten Verlauf der Trennwände 27 (Fig. 16) lässt sich zudem eine sehr große Wärmeübertragungsfläche erzeugen.

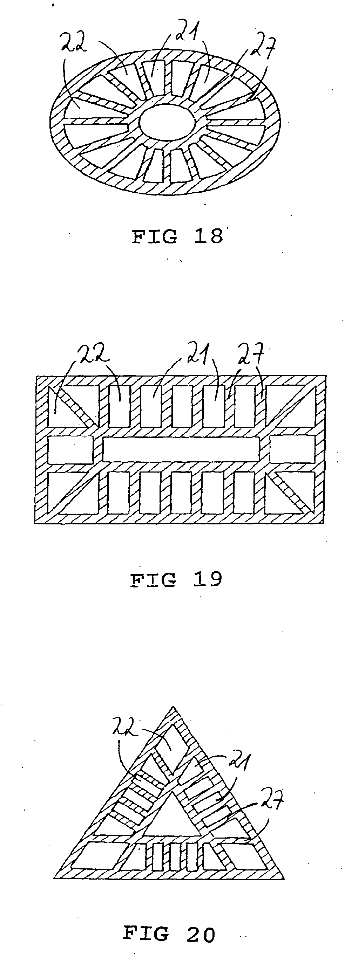

Des Weiteren ist es möglich, dass die Wärmetauscherelemente einen ovalen (Fig. 18), rechteckigen (Fig. 19) oder dreieckigen Querschnitt (Fig. 20) aufweisen, in dem die Wärmeführungskanäle 21 und Kälteführungskanäle 22 alternierend nebeneinander angeordnet sind. Die unterschiedlichen Querschnitte ermöglichen beispielsweise eine optimale Anpassung der Wärmetauscher auf unterschiedliche Platzverhältnisse. Des Weiteren können in den verschiedenen Querschnitten je nach Ausführungsform der Trennwände 27 sehr unterschiedliche Strömungsprofile erzeugt werden, wodurch sich die Wärmetauscher an unterschiedlichste Anforderungen anpassen lassen.

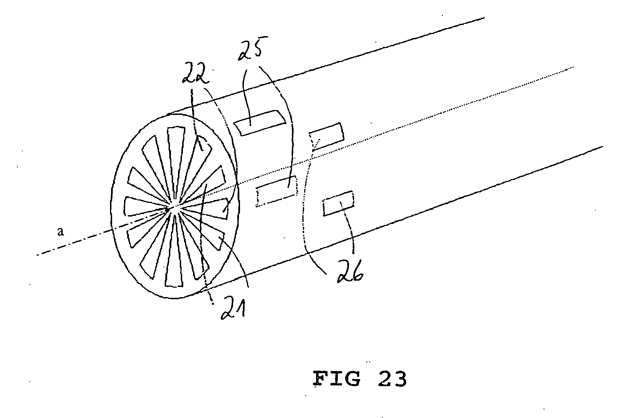

In einer weiteren Ausführungsform der Wärmetauscherelemente sind die Wärmeführungskanäle 21 und Kälteführungskanäle 22 alternierend in einem geschlossenen Ring um eine zentrale Achse a angeordnet (Fig. 23), der eine Außenseite 23 aufweist. Die Zuführung des Arbeitsfluides und des Kältefluides kann von der Stirnseite des Wärmetauscherelements oder von der Außenseite 23 erfolgen. Die Wärmeführungskanäle 21 und die Kälteführungskanäle 22 können im Querschnitt vorstehend ausgebildet sein. Öffnungen 25, 26 können in verschiedenen Ebenen quer zur Längserstreckung der Wärmetauscherelemente durch Abschleifen oder Abfräsen sowie durch Bohrungen erzeugt werden.

Eine besondere Ausführungsform der Wärmetauscherelemente zeigt Fig. 21. Die rechteckigen Wärmeführungskanäle 21 und Kälteführungskanäle 22 sind alternierend in einem Rechteckprofil angeordnet. Da die Wärmeführungskanäle 22 und Kälteführungskanäle 22 im Querschnitt nach oben und nach unten vorstehend ausgebildet sind, können durch bereichsweise Abschleifen oder Abfräsen der Außenwand 51 oder durch Bohrungen Öffnungen 25, 26 erzeugt werden. Sind die Wärmeführungskanäle 21 und die Kälteführungskanäle 22 im Querschnitt nicht vorstehend ausgebildet, lassen sich die Öffnungen 25, 26 ebenfalls durch Einbringen von Bohrungen in die Außenwand 51 erzeugen (Fig. 22).

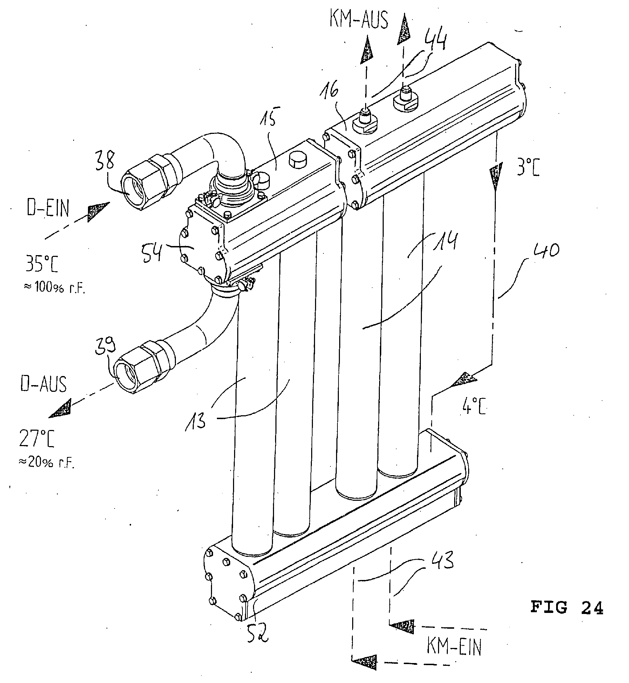

Fig. 24 stellt eine weitere Ausführungsform einer Vor-Wärmetauschersektion 11 und einer Haupt-Wärmetauschersektion 12 eines Kältetrockners nach der Erfindung dar. Die Wärmetauscherelemente 13, 14 der Vor-Wärmetauschersektion 11 und der Haupt-Wärmetauschersektion 12 sind in der vorliegenden Ausführungsform parallel in einer Reihe angeordnet. Die Wärmetauscherelemente 13, 14 sind an einer Seite endseitig in einem gemeinsamen, einstükkigen Anschlussprofil 52 gehaltert. Auf der gegenüberliegende Seite sind die Wärmetauscherelemente 13 der Vor-Wärmetauschersektion 11 endseitig im Anschlussprofil 15 und die Wärmetauscherelemente 14 der Haupt-Wärmetauschersektion 12 endseitig im Anschlussprofil 16 gehaltert. Die Anschlussprofile 15, 16, 52 sind an den Stirnseiten jeweils mit Endplatten 54 verschlossen.

Über das Anschlussprofil 15 der Vor-Wärmetauschersektion 11 erfolgt die Zu- und Abführung des ungekühlten bzw. getrockneten Arbeitsfluids zu bzw. von den Wärmetauscherelementen 13 sowie die Verteilung des ungekühlten Arbeitsfluids auf die Wärmetauscherelemente 13.

Über das gemeinsame Anschlussprofile 52 der Vor-Wärmetauschersektion 11 und der Haupt-Wärmetauschersektion 12 erfolgt die Zu- und Abführung des vorgekühlten bzw. getrockneten Arbeitsfluids zu bzw. von den Wärmetauscherelementen 13, 14 sowie die Verteilung des vorgekühlten bzw. des getrockneten Arbeitsfluids auf die Wärmetauscherelemente 13, 14.

Über das Anschlussprofile 16 der Haupt-Wärmetauschersektion 12 erfolgt die Abführung des gekühlten Arbeitsfluids von den Wärmetauscherelementen 14. In der vorliegenden Ausführungsform wird das Kältefluid über den Kältefluideintritt 43 direkt auf die Wärmetauscherelemente 14 geführt und verlässt diese direkt über den Kältefluidaustritt 44. Kältefluideintritt 43 und Kältefluidaustritt 44 sind orthogonal zur Längsachse des Anschlussprofils 52 angeordnet und durchströmt.

Das Arbeitsfluid tritt am Arbeitsfluideintritt 38 in die Vor-Wärmetauschersektion 11 ein und wird über das Anschlussprofil 15 auf die in der vorliegenden Ausführungsform parallel angeordneten und geschalteten Wärmetauscherelemente 13 geführt. Dort wird es im Gegenstrom am bereits gekühlten und getrockneten Arbeitsfluid vorbeigeführt und abgekühlt. Das bereits gekühlte und getrocknete Arbeitsfluid erwärmt sich dabei und verlässt die Vor-Wärmetauschersektion 11 über das Anschlussprofil 15 und den Arbeitsfluidaustritt 39. Das vorgekühlte Arbeitsfluid aus der Vor-Wärmetauschersektion 11 wird nun über das gemeinsame Anschlussprofil 52 in die parallel angeordneten Wärmetauscherelemente 14 der Haupt-Wärmetauschersektion 12 geführt. In den Wärmetauscherelementen 14 wird das vorgekühlte Arbeitsfluid im Gleichstrom an dem Kältefluid vorbeigeführt, das über den Kältefluideintritt 43 in die Wärmetauscherelemente 14 gelangt. Das vorgekühlte Arbeitsfluid wird in der Haupt-Wärmetauschersektion 12 abgekühlt, wobei die mitgeführte Feuchtigkeit zu einem großen Teil auskondensiert. Gekühltes Arbeitsfluid und Kondensat verlassen die Haupt-Wärmetauschersektion 12 über das Anschlussprofil 16 zum Kondensatabscheider 40. Das gekühlte und getrocknete Arbeitsfluid, wird anschließend über das Anschlussprofil 52 auf die parallel angeordneten Wärmetauscherelemente 13 der Vor-Wärmetauschersektion 11 geführt. Das Kältefluid verlässt die Haupt-Wärmetauschersektion 12 über den Kältefluidaustritt 44.

Der Vorteil dieser Ausführungsform der Vor-Wärmetauschersektion 11 und der Haupt-Wärmetauschersektion 12 ist die platzsparende Anordnung, für sehr beengte Platzverhältnisse, für den Fall, dass nur wenige parallel geschaltete Wärmetauscherelemente 13, 14 in der Vor-Wärmetauschersektion 11 und der Haupt-Wärmetauschersektion 12 benötigt werden.

Der erfindungsgemäße Kältetrockner bzw. das erfindungsgemäße Wärmetauscherelement erzielt nach dem Grundgedanken der Erfindung bzw. in verschiedenen vorzugsweisen Ausgestaltungen insbesondere die folgenden Vorteile. Es wird ein modularer Aufbau der Gesamtanordnung mit der Möglichkeit zur einfachen Kapazitätsanpassung durch Länge und/oder Anzahl der Tauscherrohre erzielt. Darüber hinaus können wenige, teils identische Bauteile für verschiedene Teilaufgaben eingesetzt werden. Es werden Bauteile mit mehreren Teilfunktionen zu integral gefertigten Bauteilen (Wärmetauscherrohr mit Wärmeführungskanälen und Kälteführungskanälen im Gegensatz zu einzelnen Lamellen oder Profilblechen bei Lamellenblockkühlern) gebündelt. Eine Verbindung der Einzelbauteile ist durch einfache Verbindungstechniken auch lösbar möglich. In einer besonders bevorzugten Ausführung besitzen jeweils die beiden Anschlussprofile und die beiden Wärmetauscherrohre jeweils den selben Profilquerschnitt. Sowohl Vor-Wärmetauschersektion als auch Haupt-Wärmetauschersektion können noch von einer thermischen Speichermasse oder einer zusätzlichen Isolierung umgeben sein.

### Bezugszeichenliste

- 11: Vor-Wärmetauschersektion
- 12: Haupt-Wärmetauschersektion
- 13: Wärmetauscherelemente (Vor-Wärmetauschersektion)
- 14: Wärmetauscherelemente (Haupt-Wärmetauschersektion)
- 15, 16: Anschlussprofil
- 17, 18: Fluidführungskammer
- 19, 20: Verspannungselemente, Stangen
- 21: Wärmeführungskanäle
- 22: Kälteführungskanäle
- 23: Außenseite (Wärmetauscherelement)
- 24: Innenseite (Wärmetauscherelement)
- 25: Öffnungen (Kälteführungskanäle)
- 26: Öffnungen (Wärmeführungskanäle)
- 27: Trennwände
- 28: Profilierungen, Rippen
- 29: zentraler Kanal
- 30: Dichtung
- 31: Spannelement
- 32: Dichtungsring
- 33: Dichtungsring
- 34: Dichtelement
- 35: Dichtungsring
- 36: Fluidleitung
- 37: Fluidleitung
- 38: Abeitsfluideintritt
- 39: Arbeitsfluidaustritt
- 40: Kondensatabscheider
- 41: Kondensatablass
- 42: Kältefluidkreislauf
- 43: Kältefluideintritt
- 44: Kältefluidaustritt
- 45: Öffnungen (für Wärmetauscherelement)
- 46: Öffnung (für Fluidleitung)
- 47: Zwischenwand
- 48: Öffnung (für Wärmetauscherelement)
- 49: Öffnungen (für Verspannungselement)
- 50: Öffnung (für Fluidleitung)
- 51: Außenwand
- 52, 53: Anschlussprofil
- 54: Endplatten
- 55: Gewindebohrungen
- 56: Bohrungen

## Patentansprüche

1. Kältetrockner, insbesondere Druckluftkältetrockner zur Trocknung eines gasförmigen Arbeitsfluids unter Abkühlung des gasförmigen Arbeitsfluids durch Einsatz eines Kältefluids umfassend: eine Vor-Wärmetauschersektion (11) und eine Haupt-Wärmetauschersektion (12), wobei die Vor-Wärmetauschersektion (11) und/oder die Haupt-Wärmetauschersektion (12) wenigstens ein vorzugsweise langgestrecktes Wärmetauscherelement (13, 14) umfasst,
- wobei in der Vor-Wärmetauschersektion (11) eine Abkühlung des an den Kältetrockner geführten Arbeitsfluids durch das getrocknete und gekühlte Arbeitsfluid in Gegenstromprinzip erfolgt,
- wobei in der Haupt-Wärmetauschsektion (12) eine weitere Abkühlung des vorgekühlten, in den Kältetrockner geführten Arbeitsfluids durch das Kältefluid erfolgt, so dass Feuchtigkeit aus dem Arbeitsfluid auskondensiert,
- wobei alle Strömungskanäle (21, 22) der Vor-Wärmetauschersektion (11) und/oder der Haupt-Wärmetauschersektion (12) im Wesentlichen durch Hohlkammerprofile mit einer Mehrzahl von Wärmeführungskanälen (21) und/oder von Kälteführungskanälen (22) ausgebildet sind,
- wobei das wenigstens eine Wärmetauscherelement (13, 14) der Vor-Wärmetauschersektion (11) und/oder der Haupt-Wärmetauschersektion (12) endseitig in jeweils einem Anschlussprofil (15, 16, 52, 53) fluiddicht gehaltert und angeschlossen ist,
- wobei das Wärmetauscherelement als vorzugsweise langgestrecktes Rohrprofil ausgebildet ist und die Wämeführungskanäle (21) und Kälteführungskanäle (22) sich entlang des Rohrprofils erstrecken,
- wobei die Wärmeführungskanäle (21) und die Kälteführungskanäle (22) durch integral mit dem Rohrprofil ausgebildete Trennwände (27) voneinander getrennt sind und **dadurch** gekennzeichet, daß
- die Wärmeführungskanäle (21) und die Kälteführungskanäle (22) einander benachbart, jedoch alternierend angeordnet sind.

2. Kältetrockner nach Anspruch 1,
**dadurch gekennzeichnet,**
**dass** die Wärmeführungskanäle (21) und/oder die Kälteführungskanäle (22) quer zur Längserstreckung des Rohrprofils endseitig durch Öffnungen (25, 26) geöffnet sind, derart, dass Zu- bzw. Abströmung zu den Wärmeführungskanälen (21) und/oder Kälteführungskanälen (22) quer zur Längserstreckung des Rohrprofils erfolgt.

3. Kältetrockner nach Anspruch 1 oder 2,
**dadurch gekennzeichnet,**
**dass** das Anschlussprofil (15, 16, 52, 53) im Wesentlichen als Hohlkammerprofil ausgebildet ist.

4. Kältetrockner nach einem der Ansprüche 1 bis 3,
**dadurch gekennzeichnet**,
das die Anordnung aus Vor-Wärmetauschersektion (11), aus Haupt-Wärmetauschersektion (12) sowie aus endseitig jeweils vorgesehenen Anschlussprofilen (15, 16, 52, 53) aus insgesamt mindestens vier Hohlkammerprofilen gebildet ist.

5. Kältetrockner nach Anspruch 4,
**dadurch gekennzeichnet,**
**dass** die mindestens vier Hohlkammerprofile in Form zweier unterschiedlicher Typen vorliegen, die sich in ihren Profilquerschnitten unterscheiden.

6. Kältetrockner nach einem der Ansprüche 1 bis 5,
**dadurch gekennzeichnet,**
**dass** das Anschlussprofil (15, 16, 52, 53) einstückig ausgebildet ist.

7. Kältetrockner nach einem der Ansprüche 1 bis 6,
**dadurch gekennzeichnet,**
**dass** das Anschlussprofil (15, 16, 52, 53) mindestens eine, vorzugsweise mindestens zwei Fluidführungskammern (17, 18) umfasst, die durch das Hohlkammerprofil des Anschlussprofils (15, 16, 52, 53) definiert sind.

8. Kältetrockner nach einem der Ansprüche 1 bis 7,
**dadurch gekennzeichnet,**
**dass** das Anschlussprofil (15, 16, 52, 53) zum fluiddichten Anschluss einer Mehrzahl von zueinander beabstandeter Wärmetauscherelemente (13, 14) ausgebildet ist.

9. Kältetrockner nach einem der Ansprüche 1 bis 8,
**dadurch gekennzeichnet,**
**dass** Wärmetauscherelemente (13, 14) der Vor-Wärmetauschersektion (11) und der Haupt-Wärmetauschersektion (12) in einem gemeinsamen Anschlussprofil (15, 16, 52, 53) fluiddicht gehaltert und angeschlossen sind.

10. Kältetrockner nach einem der Ansprüche 1 bis 9,
**dadurch gekennzeichnet,**
**dass** das Rohrprofil der Wärmetauscherelemente (13, 14) und/oder das Anschlussprofil (15, 16, 52, 53) durch Strangpressen oder Extrudieren gebildet sind.

11. Kältetrockner nach einem der Ansprüche 1 bis 10,
**dadurch gekennzeichnet,**
**dass** die beiden endseitig des mindestens einen Wärmetauscherelements (13, 14) vorgesehenen Anschlussprofile (15, 16, 52, 53) über starre Verspannungselemente, die insbesondere als Stangen (19, 20) ausgebildet sind, miteinander verspannt sind.

12. Kältetrockner nach Anspruch 11,
**dadurch gekennzeichnet,**
**dass** die Verspannungselemente, insbesondere die Stangen (19, 20) zumindest teilweise durch die Wärmetauscherelemente (13, 14) geführt sind.

13. Kältetrockner nach einem der Ansprüche 1 bis 12,
**dadurch gekennzeichnet,**
**dass** das wenigstens eine langgestreckte Wärmetauscherelement (13) endseitig jeweils derart in den Anschlussprofilen (15, 16) gehaltert ist, dass die Vorzugsrichtungen der Anschlussprofile zueinander parallel verlaufen und die Wärmetauscherelemente im Wesentlichen orthogonal hierzu ausgerichtet sind.

14. Kältetrockner nach einem der Ansprüche 1 bis 13,
**dadurch gekennzeichnet,**
**dass** die Anschlussprofile (15, 16, 52, 53) aus dem gleichen Grundmaterial wie die Wärmetauscherelemente (13, 14), insbesondere aus Aluminium gebildet sind.

15. Kältetrockner nach Anspruch 14,
**dadurch gekennzeichnet,**
**dass** die Öffnungen (26) der Wärmeführungskanäle (21) und/oder die Öffnungen (25) der Kälteführungskanäle (22) endseitig am Rohrprofil im Wesentlichen in einer Ebene liegen.

16. Kältetrockner nach einem der Ansprüche 1 bis 15,
**dadurch gekennzeichnet,**
**dass** die Außenwandungen der Wärmeführungskanäle (21) oder der Kälteführungskanäle (22) gegenüber den Außenwandungen der Kälteführungskanäle (22) oder der Wärmeführungskanäle (21) zumindest an einer Außenseite (24) oder Innenseite (23) im Querschnitt vorstehend ausgebildet sind und
**dass** das Wärmetauscherelement einen kreisförmigen Querschnitt aufweist und die Öffnungen (25, 26) in die im Querschnitt vorstehend angeordneten Wärmeführungskanäle (21) oder Kälteführungskanäle (22) durch bereichsweises Materialabtragen, insbesondere Abdrehen eingebracht sind.

17. Kältetrockner nach einem der Ansprüche 1 bis 16,
**dadurch gekennzeichnet,**
**dass** die Trennwände (27) zwischen Wärmeführungskanälen (21) und Kälteführungskanälen (22) zumindest an einer Seite, vorteilhafterweise beidseitig zur Vergrößerung der Wärmetauscherfläche mit Profilierungen, insbesondere Rippen (28) versehen sind.

18. Kältetrockner nach einem der Ansprüche 1 bis 17,
**dadurch gekennzeichnet,**
**dass** die Wärmeführungskanäle (21) und die Kälteführungskanäle (22) um einen längs des Wärmetauscherelementes verlaufenden zentralen Kanal (29) herum angeordnet sind.

19. Kältetrockner nach Anspruch 18,
**dadurch gekennzeichnet,**
**dass** der zentrale Kanal (29) endseitig über die Öffnungen (25, 26) mit den Wärmeführungskanälen (21) oder den Kälteführungskanälen (22) in Fluidverbindung steht und zur Mitte des Rohrprofils hin über ein Dichtelement (34) verschlossen ist.

20. Kältetrockner nach einem der Ansprüche 1 bis 19,
**dadurch gekennzeichnet,**
**dass** die Wärmeführungskanäle (21) und/oder die Kälteführungskanäle (22) einen im Wesentlichen kreissegmentförmigen Querschnitt aufweisen.

21. Kältetrockner nach einem der Ansprüche 1 bis 20,
**dadurch gekennzeichnet,**
**dass** die Trennwände (27) zur Vergrößerung der Wärmetauscherfläche einen gekrümmten oder geknickten Verlauf aufweisen.

22. Kältetrockner nach Anspruch 21,
**dadurch gekennzeichnet,**
**dass** die Trennwände (27) im Querschnitt zur Längserstreckung des Wärmetauscherelements einen spiralarmartigen Verlauf aufweisen.

23. Kältetrockner nach Anspruch 10 oder 20,
**dadurch gekennzeichnet,**
**dass** das Profil einen kreisförmigen Querschnitt aufweist und in axialer Richtung schraubenförmig gedreht (mit einer vorbestimmten Steigung) ausgebildet ist.

24. Wärmetauscherelement für flüssige oder gasförmige Medien zur Verwendung in einem Kältetrockner nach einem der Ansprüche 1 bis 23, wobei das Wärmetauscherelement als vorzugsweise langgestrecktes Rohrprofil ausgebildet ist und mehrere sich entlang des Rohrprofils erstreckende Wärmeführungskanäle (21) und Kälteführungskanäle (22) umfasst, die Wärmeführungskanäle (21) und die Kälteführungskanäle (22) einander benachbart, jedoch alternierend angeordnet sind, wobei die Wärmeführungskanäle (21) und die Kälteführungskanäle (22) durch integral mit dem Rohrprofil ausgebildete Trennwände (27) voneinander getrennt sind,
**dadurch gekennzeichnet, dass** die Wärmeführungskanäle (21) und die Kälteführungskanäle (22) einander benachbart, jedoch alternierend angeordnet sind, und
dass die Außenwandungen der Wärmeführungskanäle (21) oder der Kälteführungskanäle (22) gegenüber den Außenwandungen der Kälteführungskanäle (22) oder der Wärmeführungskanäle (21) zumindest an einer Außenseite (24) oder Innenseite (23) im Querschnitt vorstehend ausgebildet sind.

25. Wärmetauscherelement für flüssige oder gasförmige Medien zur Verwendung in einem Kältetrockner nach einem der Ansprüche 1 bis 23, wobei das Wärmetauscherelement als vorzugsweise langgestrecktes Rohrprofil ausgebildet ist und mehrere sich entlang des Rohrprofils erstreckende Wärmeführungskanäle (21) und Kälteführungskanäle (22) umfasst, , wobei die Wärmeführungskanäle (21) und die Kälteführungskanäle (22) durch integral mit dem Rohrprofil ausgebildete Trennwände (27) voneinander getrennt sind,
**dadurch gekennzeichnet, dass** die Wärmeführungskanäle (21) und die Kälteführungskanäle (22) einander benachbart, jedoch alternierend angeordnet sind, and
dass die Wärmeführungskanäle (21) und die Kälteführungskanäle (22) quer zur Längserstreckung des Rohrprofils endseitig durch Öffnungen (25, 26) geöffnet sind, derart, dass Zu- bzw. Abströmung zu den Wärmeführungskanälen (21) und Kälteführungskanälen (22) quer zur Längserstreckung des Rohrprofils erfolgt, wobei ferner die Öffnungen (26) der Wärmeführungskanäle (21) gegenüber den Öffnungen (25) der Kälteführungskanäle (22) in Längserstreckung des Rohrprofils versetzt angeordnet sind.

## Claims

1. A refrigerant dryer, in particular a compressed-air refrigerant dryer for drying a gaseous operating fluid while cooling the gaseous operating fluid using a refrigerating fluid, comprising: a pre-heat exchanger section (11) and a main heat exchanger section (12), wherein the pre-heat exchanger section (11) and/or the main heat exchanger section (12) comprise/s at least one preferably elongate heat exchanger element (13, 14),
- wherein a cooling of the operating fluid supplied to the refrigerant dryer takes place in the pre-heat exchanger section (11) by means of the dried and cooled operating fluid according to the counter-current principle,
- wherein a further cooling of the pre-cooled operating fluid supplied into the refrigerant dryer takes place in the main heat exchanger section (12) by means of the refrigerating fluid so that humidity condensates out from the operating fluid,
- wherein all of the flow ducts (21, 22) of the pre-heat exchanger section (11) and/or the main heat exchanger section (12) substantially are formed by hollow chamber profiles having a plurality of heat-conducting channels (21) and/or cold-conducting channels (22),
- wherein the at least one heat exchanger element (13, 14) of the pre-heat exchanger section (11) and/or of the main heat exchanger section (12) at the end side thereof is supported in and connected to a connection profile (15, 16, 52, 53) in a fluid-tight manner,
- wherein the heat exchanger element is formed to be a preferably elongate tubular profile, and the heat-conducting channels (21) and the cold-conducting channels (22) extend along the tubular profile,
- wherein the heat-conducting channels (21) and the cold-conducting channels (22) are separated from each other by partitions (27) formed to be integral with the tubular profile, and **characterized in that**
- the heat-conducting channels (21) and the cold-conducting channels (22) are arranged adjacent to each other but in an alternating manner.

2. The refrigerant dryer according to claim 1,
**characterized in that**
the heat-conducting channels (21) and/or the cold-conducting channels (22) at the end side thereof are opened by openings (25, 26) transversely to the longitudinal extension of the tubular profile in such a manner that the inflow or outflow to/from the heat-conducting channels (21) and/or cold-conducting channels (22) takes place transversely to the longitudinal extension of the tubular profile.

3. The refrigerant dryer according to claim 1 or 2,
**characterized in that**
the connection profile (15, 16, 52, 53) substantially is formed as a hollow chamber profile.

4. The refrigerant dryer according to any one of claims 1 to 3,
**characterized in that**
the arrangement made up of the pre-heat exchanger section (11), the main heat exchanger section (12), and the connection profiles (15, 16, 52, 53) each provided at the end side, is formed of a total of at least four hollow chamber profiles.

5. The refrigerant dryer according to claim 4,
**characterized in that**
the at least four hollow chamber profiles are present in the form of two different types differing in their profile cross-sections.

6. The refrigerant dryer according to any one of claims 1 to 5,
**characterized in that**
the connection profile (15, 16, 52, 53) is formed to be one-piece.

7. The refrigerant dryer according to any one of claims 1 to 6,
**characterized in that**
the connection profile (15, 16, 52, 53) comprises at least one, preferably at least two fluid conduction chambers (17, 18) which are defined by the hollow chamber profile of the connection profile (15, 16, 52, 53).

8. The refrigerant dryer according to any one of claims 1 to 7,
**characterized in that**
the connection profile (15, 16, 52, 53) is formed for a fluid-tight connection of a plurality of heat exchanger elements (13, 14) spaced apart from each other.

9. The refrigerant dryer according to any one of claims 1 to 8,
**characterized in that**
the heat exchanger elements (13, 14) of the pre-heat exchanger section (11) and the main heat exchanger section (12) are supported in and connected to a common connection profile (15, 16, 52, 53) in a fluid-tight manner.

10. The refrigerant dryer according to any one of claims 1 to 9,
**characterized in that**
the tubular profile of the heat exchanger elements (13, 14) and/or the connection profile (15, 16, 52, 53) are formed by rod extrusion or extruding.

11. The refrigerant dryer according to any one of claims 1 to 10,
**characterized in that**
the two connection profiles (15, 16, 52, 53) disposed at the end side of the at least one heat exchanger element (13, 14) are braced to each other by means of rigid bracing elements formed in particular as rods (19, 20).

12. The refrigerant dryer according to claim 11,
**characterized in that**
the bracing elements, in particular the rods (19, 20) at least in part are arranged so as to extend through the heat exchanger elements (13, 14).

13. The refrigerant dryer according to any one of claims 1 to 12,
**characterized in that**
the at least one elongate heat exchanger element (13) at its end side is supported in each case in the connection profiles (15, 16) such that the preferred directions of the connection profiles run in parallel to each other, and the heat exchanger elements substantially are orientated to be orthogonal thereto.

14. The refrigerant dryer according to any one of claims 1 to 13,
**characterized in that**
the connection profiles (15, 16, 52, 53) are formed from the same base material as the heat exchanger element (13, 14), in particular from aluminium.

15. The refrigerant dryer according to claim 14,
**characterized in that**
the openings (26) of the heat-conducting channels (21) and/or the openings (25) of the cold-conducting channels (22) at the end side of the tubular profile substantially lie in one plane.

16. The refrigerant dryer according to any one of claims 1 to 15,
**characterized in that**
the outer walls of the heat-conducting channels (21) or the cold-conducting channels (22) are at least at an outer side (24) or inner side (23) formed to be protruding in cross-section with respect to the outer walls of the cold-conducting channels (21) or the heat-conducting channels (21), and
the heat exchanger element has a circular cross-section, and the openings (25, 26) are realized in the heat-conducting channels (21) or cold-conducting channels (22) arranged to be protruding in cross-section by material removal, in particular trimming.

17. The refrigerant dryer according to any one of claims 1 to 16,
**characterized in that**
the partitions (27) between the heat-conducting channels (21) and the cold-conducting channels (22) are provided at least on one side, advantageously on both sides with profiled shapes, in particular fins (28), for enlarging the heat exchanger surface.

18. The refrigerant dryer according to any one of claims 1 to 17,
**characterized in that**
the heat-conducting channels (21) and the cold-conducting channels (22) are arranged around a central channel (29) extending along the heat exchanger element.

19. The refrigerant dryer according to claim 18,
**characterized in that**
the central channel (29) at its end side is in fluid communication with the heat-conducting channels (21) or the cold-conducting channels (22) through the openings (25, 26), and is closed by a seal (34) towards the center of the tubular profile.

20. The refrigerant dryer according to any one of claims 1 to 19,
**characterized in that**
the heat-conducting channels (21) and/or the cold-conducting channels (22) comprise a cross-section substantially in the form of a segment of a circle.

21. The refrigerant dryer according to any one of claims 1 to 20,
**characterized in that**
the partitions (27) have a curved or kinked shape for enlarging the heat exchanger surface.

22. The refrigerant dryer according to claim 21,
**characterized in that**
the partitions (27) have the shape of a spiral arm as seen in the cross-section to the longitudinal extension of the heat exchanger element.

23. The refrigerant dryer according to claim 10 or 20,
**characterized in that**
the profile has a circular cross-section and is formed to be helically wound (at a predefined pitch) in the axial direction.

24. A heat exchanger element for liquid or gaseous media for use in a refrigerant dryer according to any one of claims 1 to 23, wherein the heat exchanger element is formed to be a preferably elongate tubular profile and comprises a plurality of heat-conducting channels (21) and cold-conducting channels (22) extending along the tubular profile, wherein the heat-conducting channels (21) and the cold-conducting channels (22) are separated from each other by partitions (27) integrally formed with the tubular profile,
**characterized in that**
the heat-conducting channels (21) and the cold-conducting channels (22) are arranged adjacent to each other but in an alternating manner, and
the outer walls of the heat-conducting channels (21) or the cold-conducting channels (22) are at least at an outer side (24) or inner side (23) formed to be protruding in cross-section with respect to the outer walls of the cold-conducting channels (21) or the heat-conducting channels (21).

25. A heat exchanger element for liquid or gaseous media for use in a refrigerant dryer according to any one of claims 1 to 23, wherein the heat exchanger element is formed to be a preferably elongate tubular profile and comprises a plurality of heat-conducting channels (21) and cold-conducting channels (22) extending along the tubular profile, wherein the heat-conducting channels (21) and the cold-conducting channels (22) are separated from each other by partitions (27) integrally formed with the tubular profile,
**characterized in that**
the heat-conducting channels (21) and the cold-conducting channels (22) are arranged adjacent to each other but in an alternating manner, and
the heat-conducting channels (21) and the cold-conducting channels (22) at the end side thereof are opened by openings (25, 26) transversely to the longitudinal extension of the tubular profile in such a manner that the inflow and/or outflow respectively to the heat-conducting channels (21) and cold-conducting channels (22) takes place transversely to the longitudinal extension of the tubular profile, wherein the openings (26) of the heat-conducting channels (21) are further arranged to be staggered in the longitudinal extension of the tubular profile with respect to the openings (25) of the cold-conducting channels (22).

## Revendications

1. Sécheur par réfrigération, en particulier sécheur par réfrigération pour air comprimé, destiné à sécher un fluide de travail gazeux moyennant refroidissement du fluide de travail gazeux et sous l'action d'un fluide réfrigérant, comportant : une section préliminaire d'échangeur de chaleur (11) et une section principale d'échangeur de chaleur (12), la section préliminaire d'échangeur de chaleur (11) et/ou la section principale d'échangeur de chaleur (12) comportant au moins un élément d'échangeur de chaleur (13, 14) de préférence allongé,
- un refroidissement du fluide de travail amené au sécheur par réfrigération s'opérant par principe de contre-courant dans la section préliminaire d'échangeur de chaleur (11) sous l'effet du fluide de travail séché et refroidi,
- un refroidissement supplémentaire du fluide de travail prérefroidi amené dans le sécheur par réfrigération s'opérant dans la section principale d'échangeur de chaleur (12) sous l'effet du fluide réfrigérant de sorte que de l'humidité soit extraite du fluide de travail par condensation,
- tous les canaux d'écoulement (21, 22) de la section préliminaire d'échangeur de chaleur (11) et/ou de la section principale d'échangeur de chaleur (12) étant sensiblement constitués de profilés creux à chambres comportant une pluralité de canaux caloporteurs (21) et/ou de canaux frigoporteurs (22),
- l'au moins un élément d'échangeur de chaleur (13, 14) de la section préliminaire d'échangeur de chaleur (11) et/ou de la section principale d'échangeur de chaleur (12) étant maintenu et raccordé à ses extrémités dans respectivement un profilé de raccordement (15, 16, 52, 53) de manière étanche au fluide,
- l'élément d'échangeur de chaleur étant constitué comme profilé tubulaire de préférence allongé, et les canaux caloporteurs (21) et les canaux frigoporteurs (22) s'étendant le long du profilé tubulaire,
- les canaux caloporteurs (21) et les canaux frigoporteurs (22) étant séparés les uns des autres par des cloisons séparatrices (27) intégralement constituées du profilé tubulaire, et **caractérisés en ce que**
- les canaux caloporteurs (21) et les canaux frigoporteurs (22) sont disposés de façon adjacente les uns aux autres, mais en alternance.

2. Sécheur par réfrigération selon la revendication 1,
**caractérisé en ce que**
les canaux caloporteurs (21) et/ou les canaux frigoporteurs (22) sont ouverts à leurs extrémités par des orifices (25, 26) transversalement à l'étendue longitudinale du profilé tubulaire de telle façon que l'amenée aux ou l'évacuation des canaux caloporteurs (21) et/ou canaux frigoporteurs (22) s'opère transversalement à l'étendue longitudinale du profilé tubulaire.

3. Sécheur par réfrigération selon la revendication 1 ou 2,
**caractérisé en ce que**
le profilé de raccordement (15, 16, 52, 53) est sensiblement constitué comme profilé creux à chambres.

4. Sécheur par réfrigération selon l'une des revendications 1 à 3,
**caractérisé en ce que**
l'ensemble formé par la section préliminaire d'échangeur de chaleur (11), par la section principale d'échangeur de chaleur (12) ainsi que par des profilés de raccordement (15, 16, 52, 53) prévus respectivement à leurs extrémités est constitué d'au moins quatre profilés creux à chambres au total.

5. Sécheur par réfrigération selon la revendication 4,
**caractérisé en ce que**
les au moins quatre profilés creux à chambres sont présents sous forme de deux types différents, lesquels diffèrent par leurs sections de profilé.

6. Sécheur par réfrigération selon l'une des revendications 1 à 5,
**caractérisé en ce que**
le profilé de raccordement (15, 16, 52, 53) est constitué d'une seule pièce.

7. Sécheur par réfrigération selon l'une des revendications 1 à 6,
**caractérisé en ce que**
le profilé de raccordement (15, 16, 52, 53) comporte au moins une, de préférence deux chambres conductrices de fluide (17, 18) qui sont définies par le profilé creux à chambres du profilé de raccordement (15, 16, 52, 53).

8. Sécheur par réfrigération selon l'une des revendications 1 à 7,
**caractérisé en ce que**
le profilé de raccordement (15, 16, 52, 53) est constitué pour le raccordement étanche au fluide d'une pluralité d'éléments d'échangeur de chaleur (13, 14) espacés les uns des autres.

9. Sécheur par réfrigération selon l'une des revendications 1 à 8,
**caractérisé en ce que**
les éléments d'échangeur de chaleur (13, 14) de la section préliminaire d'échangeur de chaleur (11) et de la section principale d'échangeur de chaleur (12) sont maintenus et raccordés de façon étanche au fluide dans un profilé de raccordement commun (15, 16, 52, 53).

10. Sécheur par réfrigération selon l'une des revendications 1 à 9,
**caractérisé en ce que**
le profilé tubulaire des éléments d'échangeur de chaleur (13, 14) et/ou le profilé de raccordement (15, 16, 52, 53) sont formés par filage ou extrusion.

11. Sécheur par réfrigération selon l'une des revendications 1 à 10,
**caractérisé en ce que**
les deux profilés de raccordement (15, 16, 52, 53) prévus aux extrémités de l'au moins un élément d'échangeur de chaleur (13, 14) sont ancrés l'un à l'autre moyennant des éléments d'ancrage rigides qui sont en particulier constitués comme barres (19, 20).

12. Sécheur par réfrigération selon la revendication 11,
**caractérisé en ce que**
les éléments d'ancrage, en particulier les barres (19, 20), passent au moins en partie par les éléments d'échangeur de chaleur (13, 14).

13. Sécheur par réfrigération selon l'une des revendications 1 à 12,
**caractérisé en ce que**
l'au moins un élément d'échangeur de chaleur (13) allongé est maintenu à ses extrémités respectivement dans les profilés de raccordement (15, 16) de telle sorte que les directions privilégiées des profilés de raccordement soient parallèles entre elles et que les éléments d'échangeur de chaleur soient sensiblement alignés perpendiculairement à ces directions.

14. Sécheur par réfrigération selon l'une des revendications 1 à 13,
**caractérisé en ce que**
les profilés de raccordement (15, 16, 52, 53) sont composés du même matériau de base que les éléments d'échangeur de chaleur (13, 14), en particulier d'aluminium.

15. Sécheur par réfrigération selon la revendication 14,
**caractérisé en ce que**
les orifices (26) des canaux caloporteurs (21) et/ou les orifices (25) des canaux frigoporteurs (22) sont sensiblement disposés dans un même plan à leurs extrémités au niveau du profilé tubulaire.

16. Sécheur par réfrigération selon l'une des revendications 1 à 15,
**caractérisé en ce que**
les parois extérieures des canaux caloporteurs (21) ou des canaux frigoporteurs (22) font saillie au moins sur un côté extérieur (24) ou intérieur (23) en section par rapport aux parois extérieures des canaux frigoporteurs (22) ou des canaux caloporteurs (21) et **en ce que**
l'élément d'échangeur de chaleur présente une section circulaire et les orifices (25, 26) sont pratiqués dans les canaux caloporteurs (21) ou les canaux frigoporteurs (22) faisant saillie en section par enlèvement de matière dans certaines zones, en particulier par enlèvement au tour.

17. Sécheur par réfrigération selon l'une des revendications 1 à 16,
**caractérisé en ce que**
les cloisons séparatrices (27) entre les canaux caloporteurs (21) et les canaux frigoporteurs (22) sont pourvues au moins d'un côté, avantageusement des deux côtés, de profilages, en particulier de nervures (28), destinés à agrandir la surface d'échangeur de chaleur.

18. Sécheur par réfrigération selon l'une des revendications 1 à 17,
**caractérisé en ce que**
les canaux caloporteurs (21) et les canaux frigoporteurs (22) sont disposés autour d'un canal central (29) situé le long de élément d'échangeur de chaleur.

19. Sécheur par réfrigération selon la revendication 18,
**caractérisé en ce que**
le canal central (29) est en communication fluidique avec les canaux caloporteurs (21) ou avec les canaux frigoporteurs (22) à ses extrémités via les orifices (25, 26) et est obturé via un élément d'étanchéité (34) par rapport au milieu du profilé tubulaire.

20. Sécheur par réfrigération selon l'une des revendications 1 à 19,
**caractérisé en ce que**
les canaux caloporteurs (21) et/ou les canaux frigoporteurs (22) présentent une section ayant sensiblement la forme d'un segment de cercle.

21. Sécheur par réfrigération selon l'une des revendications 1 à 20,
**caractérisé en ce que**
les cloisons séparatrices (27) destinées à agrandir la surface d'échangeur de chaleur présentent un tracé courbé ou plié.

22. Sécheur par réfrigération selon la revendication 21,
**caractérisé en ce que**
les cloisons séparatrices (27) présentent en section un tracé de bras hélicoïdal par rapport à l'étendue longitudinale de l'élément de changeur de chaleur.

23. Sécheur par réfrigération selon la revendication 10 ou 20,
**caractérisé en ce que**
le profilé présente une section circulaire et est constitué avec une torsion hélicoïdale en sens axial (avec un pas prédéterminé).

24. Élément d'échangeur de chaleur pour fluides liquides ou gazeux destiné à être utilisé dans un sécheur par réfrigération selon l'une des revendications 1 à 23, l'élément d'échangeur de chaleur étant constitué comme profilé tubulaire de préférence allongé comprenant plusieurs canaux caloporteurs (21) et canaux frigoporteurs (22) s'étendant le long du profilé tubulaire, les canaux caloporteurs (21) et les canaux frigoporteurs (22) étant séparés les uns des autres par des cloisons séparatrices (27) intégralement constituées du profilé tubulaire,
**caractérisé en ce que**
les canaux caloporteurs (21) et les canaux frigoporteurs (22) sont disposés de manière adjacente les uns aux autres, mais en alternance, et **en ce que** les parois extérieures des canaux caloporteurs (21) ou des canaux frigoporteurs (22) font saillie au moins sur un côté extérieur (24) ou intérieur (23) en section par rapport aux parois extérieures des canaux frigoporteurs (22) ou des canaux caloporteurs (21).

25. Élément d'échangeur de chaleur pour fluides liquides ou gazeux destiné à être utilisé dans un sécheur par réfrigération selon l'une des revendications 1 à 23, l'élément d'échangeur de chaleur étant constitué comme profilé tubulaire de préférence allongé et comprenant plusieurs canaux caloporteurs (21) et canaux frigoporteurs (22) s'étendant le long du profilé tubulaire, les canaux caloporteurs (21) et les canaux frigoporteurs (22) étant séparés les uns des autres par des cloisons séparatrices (27) intégralement constituées du profilé tubulaire,
**caractérisé en ce que**
les canaux caloporteurs (21) et les canaux frigoporteurs (22) sont disposés de manière adjacente les uns aux autres, mais en alternance, et **en ce que** les canaux caloporteurs (21) ou les canaux frigoporteurs (22) sont ouverts à leurs extrémités par des orifices (25, 26) transversalement à l'étendue longitudinale du profilé tubulaire de telle façon que l'amenée ou l'évacuation aux canaux caloporteurs (21) et aux canaux frigoporteurs (22) s'opère transversalement à l'étendue longitudinale du profilé tubulaire, les orifices (26) des canaux caloporteurs (21) étant par ailleurs disposés en décalage par rapport aux orifices (25) des canaux frigoporteurs (22) dans l'étendue longitudinale du profilé tubulaire.
